# EUROPÄISCHE PATENTSCHRIFT

(11) **EP 2 791 488 B1**
(45) Veröffentlichungstag und Bekanntmachung des Hinweises auf die Patenterteilung: **02.12.2015**
(21) Anmeldenummer: 12797894.8
(22) Anmeldetag: 05.12.2012
(51) Int. Cl.: F02B 67/06, F16H 7/12

(54) **SPANNVORRICHTUNG FÜR EINEN RIEMENTRIEB**
CLAMPING DEVICE FOR A BELT DRIVE
DISPOSITIF DE TENSION POUR TRANSMISSION PAR COURROIE

(30) Priorität: 15.12.2011 DE 102011088652
(43) Veröffentlichungstag der Anmeldung: 22.10.2014
(73) Patentinhaber: Schaeffler Technologies AG & Co. KG, 91074 Herzogenaurach (DE)
(72) Erfinder: WOLF, Benjamin, 91094 Langensendelbach (DE); ARNETH, Roland, 91330 Eggolsheim (DE); HARTMANN, Bernd, 91085 Weisendorf (DE)
(86) Internationale Anmeldenummer: PCT/EP2012/074431
(87) Internationale Veröffentlichungsnummer: WO 2013/087467

(56) Entgegenhaltungen:
- DE-A1- 19 926 615
- DE-A1-102006 019 877
- DE-A1-102008 025 552
- JP-A- 2010 091 027

## Beschreibung

Die Erfindung betrifft eine Spannvorrichtung für einen Riementrieb, der einen endlos umlaufenden Riemen, eine Elektromaschine mit einem Antriebsrad und zumindest ein weiteres Triebrad aufweist, das über den Riemen mit dem Antriebsrad in Antriebsverbindung steht, wobei die Spannvorrichtung folgendes umfasst:
- ein Spannergehäuse, das um die Achse des Antriebsrads verschwenkbar auf der Elektromaschine gelagert ist,
- einen im Spannergehäuse beweglich gelagerten Spannarm,
- zwei Spannrollen, die den Riemen in dessen Umlaufrichtung vor und hinter dem Antriebsrad mit Vorspannkraft beaufschlagen, wobei eine der Spannrollen auf dem Spannarm gelagert ist und die andere Spannrolle ortsfest auf dem Spannergehäuse gelagert ist,
- und ein die Vorspannkraft erzeugendes Federmittel, dessen Federenden zwischen dem Spannergehäuse einerseits und dem Spannarm andererseits eingespannt sind.

### Hintergrund der Erfindung

Bei Riementrieben mit wechselweise Drehmoment aufnehmenden und abgebenden Triebrädern und einem dementsprechenden Wechsel von Zugtrum und Leertrum erfordert das Spannen des Leertrums eine Spannvorrichtung mit zwei Spannrollen, die den Riemen vor und hinter dem wechselweise antreibenden und angetriebenen Antriebsrad vorspannen. Es handelt sich typischer- aber nicht notwendigerweise um den Riementrieb einer Brennkraftmaschine mit einer Elektromaschine in Form eines Startergenerators, der nicht nur zwecks Stromerzeugung von der Brennkraftmaschine angetrieben wird, sondern auch die Brennkraftmaschine antreibt, um diese zu starten.

Bekannte Spannvorrichtungen, wie sie beispielsweise in der DE 199 26 615 A1, der gattungsgemäßen DE 10 2008 25 552 A1 und DE 10 2006 019 877 A1 vorgeschlagen sind, weisen jeweils ein am Startergenerator befestigtes Spannergehäuse und zwei beweglich darin gelagerte Spannarme auf, deren Spannrollen durch ein dazwischen angeordnetes Federmittel aufeinander zu kraftbeaufschlagt sind, um den Riemen zu spannen.

Eine Spannvorrichtung der eingangs genannten Art, d.h. mit lediglich einem im Spannergehäuse beweglich gelagerten Spannarm einerseits und einer gehäusefesten Spannrolle andererseits ist aus den nicht vorveröffentlichten Druckschriften DE 10 2011 082 764 A1, DE 10 2011 082 330 A1 und DE 10 2011 084 680 A1 bekannt. Die beiden Gleitlagerstellen für den Spannarm sind dort als Lagerschalen ausgebildet, die voneinander beabstandet entweder ortsfest im Spannergehäuse oder ortsfest am Spannarm angeordnet sind, so dass die Relativbewegung im Gleitlager entweder zwischen der Lagerschale und dem Spannarm oder zwischen der Lagerschale und dem Spannergehäuse erfolgt. Der die Führungslänge des Spannarms bestimmende Abstand der beiden Lagerschalen und folglich die Länge des im Spannergehäuses verlaufenden Spannarmabschnitts richten sich zum einen nach der zulässigen, durch das Gleitlagerspiel bedingten Verkippung des Spannarms quer zur Riemenebene und zum anderen - bei vorgegebenem Bauraumangebot des Spannergehäuses - nach dem erforderlichen Bauraumbedarf des den Spannarm beaufschlagenden Federmittels.

### Aufgabe der Erfindung

Ausgehend hiervon liegt der vorliegenden Erfindung die Aufgabe zugrunde, eine Spannvorrichtung der eingangs genannten Art sowohl im Hinblick auf die verkipparme Gleitlagerung des Spannarms im Spannergehäuse als auch im Hinblick auf die Charakteristik des Federmittels zu verbessern.

### Zusammenfassung der Erfindung

Die Lösung hierfür besteht darin, dass das Federmittel zwei in Reihe geschaltete Schraubendruckfedern umfasst. Deren einander zugewandte Federenden sind durch ein im Spannergehäuse gleitend gelagertes Zwischenstück separiert, wobei der Spannarm einen Dornfortsatz aufweist, der die seitens des Spannarms verlaufende Schraubendruckfeder durchsetzt und im Zwischenstück gleitend gelagert ist. Die erfindungsgemäße Reihenschaltung der Federn ermöglicht es, die weiter innen im Spannergehäuse verlaufende Gleitlagerstelle des Spannarms in Form des schwimmend gelagerten Zwischenstücks zwischen den beiden Federn anzuordnen, wobei der von den Federwindungen begrenzte Federinnenraum als Bauraum für den dort als Dornfortsatz ausgebildeten Spannarm genutzt wird. Da also ein Teil des Gehäusebauraums sowohl vom Spannarm als auch vom Federmittel genutzt wird, können sowohl der Gleitlagerabstand im Hinblick auf eine kippstabilere Führung des Spannarms im Spannergehäuse als auch die effektive Länge des Federmittels im Hinblick auf eine Federcharakteristik mit flacher Federkennlinie bei vorgegebener Federvorspannung und einem großem Arbeitsweg vergrößert werden.

Der Spannarm und die Schraubendruckfeder können grundsätzlich gerade und bezüglich der Federn konventionell zylindrisch geformt sein. Zugunsten eines radial kompakten Bauraums der Spannvorrichtung ist es jedoch zweckmäßig, wenn der Spannarm kreisbogenförmig und die Schraubendruckfedern als Bogenfedern ausgebildet sind.

Vorzugsweise handelt es sich bei den Bogenfedern um Gleichteile. In diesem Fall sind bei Stellbewegungen des Spannarms dessen Relativweg gegenüber dem Zwischenstück und der Relativweg des Zwischenstücks gegenüber dem Spannergehäuse gleich groß und betragen jeweils die Hälfte des Stellwegs des Spannarms.

### Kurze Beschreibung der Zeichnungen

Ein Ausführungsbeispiel der Erfindung ist anhand der nachfolgend beschriebenen Zeichnungen erläutert. Es zeigen:
- Figur 1: die aus DE 10 2011 084 680 A1 bekannte Elektromaschine mit darauf montierter Spannvorrichtung in perspektivischer Zusammenbaudarstellung;
- Figur 2: die bekannte Spannvorrichtung gemäß Figur 1 in perspektivischer Rückansicht auf das Spannergehäuse;
- Figur 3: eine erfindungsgemäß modifizierte Spannvorrichtung mit geöffnetem Spannergehäuse im Querschnitt und
- Figur 4: die Spannvorrichtung gemäß Figur 3 ohne Federmittel in vergrößerter Darstellung.

Sofern nicht anders erwähnt, sind dabei gleiche oder funktionsgleiche Merkmale oder Bauteile mit gleichen Bezugszahlen versehen.

### Ausführliche Beschreibung der Zeichnungen

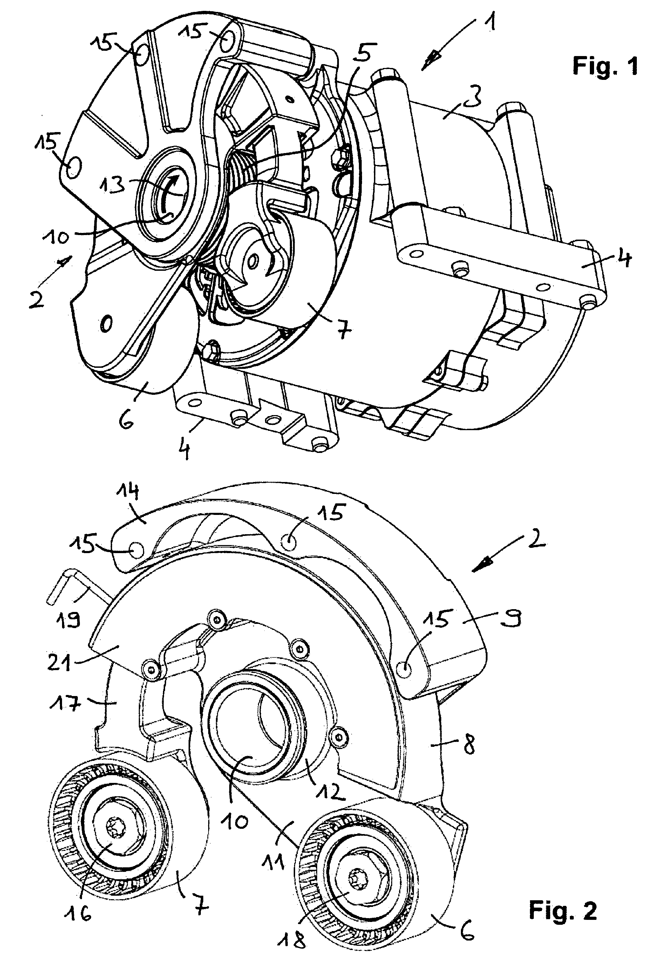

Bei der in Figur 1 dargestellten Elektromaschine 1 handelt es sich um einen Startergenerator eines Nebenaggregate-Riementriebs einer Brennkraftmaschine, wobei der Startergenerator 1 mit einer Spannvorrichtung 2 für einen (nicht dargestellten) endlos umlaufenden Poly-V-Riemen zu einer Baueinheit zusammengefasst ist. Der Startergenerator 1 umfasst ein generell zylindrisches Maschinengehäuse 3, das hier mittels Adaptern 4 mit der Brennkraftmaschine verschraubt ist. Auf der Frontseite des Maschinengehäuses 3 verläuft ein auf einer zentralen (nicht erkennbaren) Antriebswelle verschraubtes Antriebsrad 5, das über den Riemen zumindest mit dem (ebenfalls nicht dargestellten) Kurbelwellen-Triebrad der Brennkraftmaschine in Antriebsverbindung steht.

Das Kurbelwellen-Triebrad wird auf an sich bekannte Weise zum Starten der Brennkraftmaschine vom Antriebsrad 5 des Startergenerators 1 angetrieben, um daraufhin selber bei gestarteter Brennkraftmaschine das Antriebsrad 5 zur Stromerzeugung anzutreiben. Das dementsprechend wechselweise Drehmoment abgebende bzw. Drehmoment aufnehmende Antriebsrad 5 bewirkt einen dazu synchronen Wechsel von Zugtrum und Leertrum im Riementrieb, der die durch den Pfeil nahe des Antriebsrads 5 eingezeichnete Umlaufrichtung des Riemens aufweist. Im Startbetrieb der Brennkraftmaschine ist dasjenige Riementrum das Zugtrum, das in Umlaufrichtung vor dem antreibenden Antriebsrad 5 verläuft, und dasjenige Riementrum das Leertrum, das in Umlaufrichtung hinter dem Antriebsrad 5 verläuft. Umgekehrt ist im Generatorbetrieb dasjenige Riementrum das Leertrum, das in Umlaufrichtung vor dem dann angetriebenen Antriebsrad 5 verläuft, und dasjenige Riementrum das Zugtrum, das in Umlaufrichtung hinter dem Antriebsrad 5 verläuft.

Die Spannvorrichtung 2 ist frontseitig auf dem Maschinengehäuse 3 montiert und umfasst zwei Spannrollen 6 und 7, die den Riemen in dessen Umlaufrichtung vor bzw. hinter dem Antriebsrad 5 mit Vorspannkraft beaufschlagen, um die sich abwechselnden Leertrums des Riementriebs zu spannen.

Figur 2 zeigt die Spannvorrichtung 2 als Baueinheit vor deren Montage an die Elektromaschine 1 im Zusammenbau. Die Spannvorrichtung 2 umfasst ein Spannergehäuse 8 und einen Lagerträger 9 mit einer Lagerstelle 10, an der das Spannergehäuse 8 mit den Spannrollen 6, 7 gegenüber dem Lagerträger 9 verschwenkbar gelagert ist. Bei der Lagerstelle 10 handelt es sich um einen Lagerzapfen, der von einer axial benachbart zum Spannergehäuse 8 verlaufenden Stirnwand 11 des Lagerträgers 9 ausgeht und sich zum Spannergehäuse 8 hin erstreckt. Das Spannergehäuse 8 ist mit einem zylindrischen Vorsprung 12 versehen, der auf dem Lagerzapfen 10 gleitgelagert aufgenommen ist.

Wie es aus dem Zusammenbau gemäß Figur 1 hervorgeht, verläuft der durchgehend hohlzylindrische Lagerzapfen 10 konzentrisch zum Antriebsrad 5. Dies bedeutet zum einen, dass die Schwenklagerung der Spannvorrichtung 2 und die Drehachse des Antriebsrads 5 koaxial sind, und ist zum anderen Voraussetzung dafür, dass die (als Ecke einer Achsmutter nur teilweise erkennbare) Achsverschraubung 13 des Antriebsrads 5 axialen Bauraum sparend im Inneren des Lagerzapfens 10 aufgenommen ist. Da dieser an der Seite des Antriebsrads 5 verläuft, die dem Maschinengehäuse 3 abgewandt ist, überspannt der Lagerträger 9 das Spannergehäuse 8 axial mit einem Anschraubflansch 14, der entsprechend der Zylinderform des Maschinengehäuses 3 im wesentlichen kreisbogenförmig gestaltet ist. Die Befestigung des Lagerträgers 9 an der Frontseite des Maschinengehäuses 3 erfolgt mittels einer Schraubverbindung an drei Befestigungspunkten 15 (die Verschraubung selbst ist in Figur 1 nicht dargestellt).

Die in Umlaufrichtung des Riemens hinter dem Antriebsrad 5 angeordnete Spannrolle 7 ist mittels einer Achsschraube 16 auf einem Spannarm 17 gelagert, der gegen die Kraft eines im Spannergehäuse 8 aufgenommenen und hier nicht sichtbaren Federmittels um die Drehachse des Antriebsrads 5 beweglich im Spannergehäuse 8 gelagert ist. Demgegenüber ist die Spannrolle 6 mittels einer Achsschraube 18 ortsfest auf dem Spannergehäuse 8 gelagert. Ein durch eine Gehäusebohrung in eine Spannarmbohrung (beide Bohrungen sind nicht erkennbar) eingesetzter Sicherungsstift 19 dient als Montagesicherung, die den Spannarm 17 in einer vorgespannten Transportstellung gegenüber dem Spannergehäuse 8 fixiert, bevor der Riementrieb montiert ist.

Die schwenkbare Gleitlagerung des Spannergehäuses 8 ermöglicht es, dass bei einem Betriebswechsel des Startergenerators 1 und einer entsprechenden Vertauschung von Zugtrum mit Leertrum im Riementrieb das Spannergehäuse 8 mit den Spannrollen 6, 7 um die Drehachse des Antriebsrads 5 verschwenkt. Wenn also beispielsweise der Startergenerator 1 vom Starterbetrieb in den Generatorbetrieb wechselt, dann wechselt das Riementrum seitens der gehäuseseitig beweglichen Spannrolle 7 von Leertrum auf Zugtrum und seitens der gehäuseseitig ortsfesten Spannrolle 6 von Zugtrum auf Leertrum. Folglich führt dieser Betriebswechsel zu einer Verschwenkung des Spannergehäuses 8 aus dem dann aktuellen Zugtrum seitens der Spannrolle 7 heraus in das dann aktuelle Leertrum seitens der Spannrolle 6 hinein, d.h. bei der eingezeichneten Umlaufrichtung des Riemens gemäß Figur 1 zu einer Verschwenkung entgegen der Umlaufrichtung. Dabei wird die Vorspannkraft im Riementrieb stets durch das Federmittel innerhalb des Spannergehäuses aufrecht erhalten, das den Spannarm 17 aus dem Spannergehäuse 8 heraus mit Druckkraft beaufschlagt.

Diese Arbeitsweise der Spannvorrichtung 2, d.h. das spannende Hineinschwenken in das jeweils aktuelle Leertrum bewirkt auch eine sogenannte Entkopplung der rotierenden Startergeneratormasse von der Kurbelwelle der Brennkraftmaschine. Diese Entkopplung übernimmt üblicherweise ein Entkoppler am Generator (z.B. ein Generatorfreilauf) oder an der Kurbelwelle, der bei konventionellen Generatormaschinen ohne Startermodus auf der Generator- bzw. auf der Kurbelwelle angeordnet ist und die vergleichsweise träge rotierende Generatormasse von der Kurbelwelle abkoppelt, wenn deren Drehzahlgradient negativ ist. Das heißt, die erfindungsgemäße Spannvorrichtung 2 kann auch bei konventionellen Generator-Riementrieben (ohne Startermodus) alternativ oder unterstützend zum Entkoppler verwendet werden.

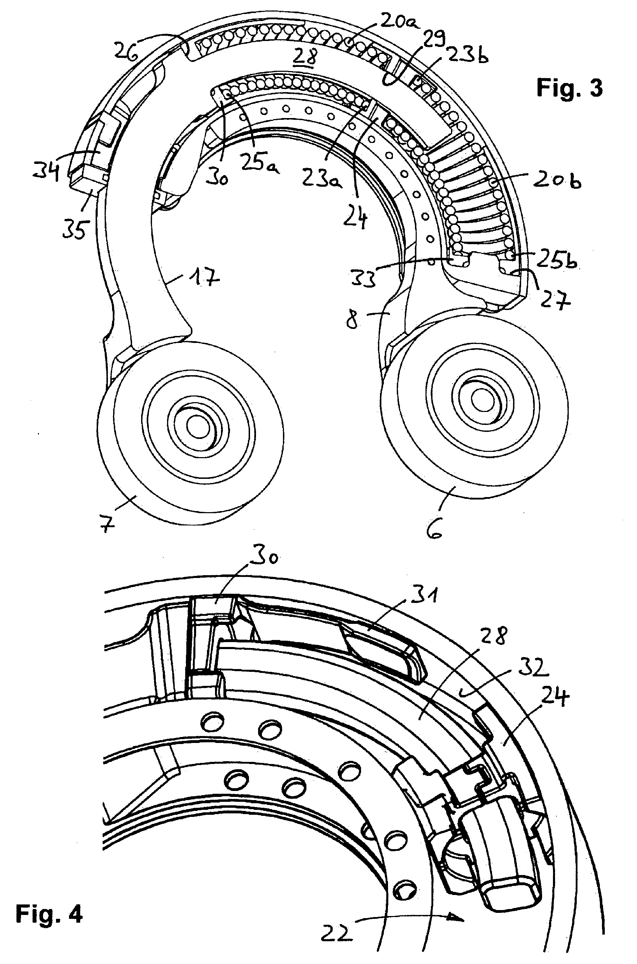

Die Figuren 3 und 4 zeigen ein modifiziertes Spannergehäuse 8, aus der die erfindungsgemäße konstruktive Gestaltung des die Riemenvorspannung erzeugenden Federmittels in Verbindung mit der Lagerung des Spannarms 17 hervorgeht. Das Spannergehäuse 8 ist dort offen, d.h. ohne den damit verschraubten Gehäusedeckel 21 gemäß Figur 2 dargestellt. Im Inneren des Spannergehäuses 8 verläuft ein kreisbogenförmiger und im Querschnitt rechteckiger Aufnahmeraum 22 für den darin beweglich gelagerten Spannarm 17 und für das Federmittel. Dieses besteht aus zwei in Reihe geschalteten Schraubendruckfedern und hier baugleichen Bogenfedern 20a und 20b mit der Krümmung des Aufnahmeraums 22, deren einander zugewandte, innere Federenden 23a bzw. 23b durch ein im Aufnahmeraum 22 gleitend gelagertes Zwischenstück 24 separiert sind. Die äußeren Federenden 25a bzw. 25b sind zwischen einem Absatz 26 des Spannarms 17 einerseits und einer Stirnwand 27 des Aufnahmeraums 22 andererseits eingespannt. Der innerhalb des Aufnahmeraums 22 verlaufende Spannarmteil ist als dementsprechend kreisbogenförmiger Dornfortsatz 28 ausgebildet, der die seitens des Spannarms 17 verlaufende Bogenfeder 20a durchsetzt und in einer Bohrung 29 des Zwischenstücks 24 gleitend gelagert ist. Der Dornfortsatz 28 und die dazu passend geformte Bohrung 29 sind mit einem im wesentlichen quadratischen Querschnitt formschlüssig gegen Relativverdrehung gesichert, wodurch der Spannarm 17 mit dessen Spannrolle 7 zusätzlich an einer unzulässig hohen Verkippung aus der Riemenebene heraus gehindert ist.

Das spannarmseitige äußere Federende 25a ist am Spannarm 17 mittels eines Gleitlagerstücks 30 abgestützt, das mit einer Zunge 31 versehen ist. Diese verhindert einen direkten Kontakt der Bogenfeder 20a mit der abstützenden Längsdert einen direkten Kontakt der Bogenfeder 20a mit der abstützenden Längswand 32 des Aufnahmeraums 22. In gleicher Weise ist die Bogenfeder 20b mit deren äußerem Federende 25b an der Stirnwand 27 mittels des Distanzstücks 33 abgestützt. Ein weiteres Gleitlagerstück 34 verschließt den Aufnahmeraum 22 seitens des Spannarms 17. Ein Dichtelement 35 schützt den Aufnahmeraum 22 vor eindringenden Schmutzpartikeln.

Die Gleitlagerstücke 30, 34 und das Zwischenstück 24 sowie das Distanzstück 33 dienen nicht nur der beweglichen Lagerung, sondern - infolge der Gleitreibung - auch der Schwingungsdämpfung des Spannarms 17 und der Bogenfedern 20a, 20b im Spannergehäuse 8. Als Werkstoff ist jeweils Polyamid mit darin eingelagertem Trockenschmierstoff in Form von PTFE (Polytetrafluorethylen) vorgesehen.

**Liste der Bezugszahlen**
- 1: Elektromaschine / Startergenerator
- 2: Spannvorrichtung
- 3: Maschinengehäuse
- 4: Adapter
- 5: Antriebsrad
- 6: ortsfeste Spannrolle
- 7: bewegliche Spannrolle
- 8: Spannergehäuse
- 9: Lagerträger
- 10: Lagerstelle / Lagerzapfen
- 11: Stirnwand des Lagerträgers
- 12: zylindrischer Vorsprung des Spannergehäuses
- 13: Achsverschraubung des Antriebsrads
- 14: Anschraubflansch des Lagerträgers
- 15: Befestigungspunkt des Lagerträgers
- 16: Achsschraube der beweglichen Spannrolle
- 17: Spannarm

- 18: Achsschraube der ortsfesten Spannrolle
- 19: Sicherungsstift
- 20: Federmittel / Bogenfeder
- 21: Gehäusedeckel
- 22: Aufnahmeraum
- 23: inneres Federende
- 24: Zwischenstück
- 25: äußeres Federende
- 26: Absatz des Spannarms
- 27: Stirnwand des Aufnahmeraums
- 28: Dornfortsatz des Spannarms
- 29: Bohrung des Zwischenstücks
- 30: Gleitlagerstück
- 31: Zunge des Gleitlagerstücks
- 32: Längswand des Aufnahmeraums
- 33: Distanzstück
- 34: weiteres Gleitlagerstück
- 35: Dichtelement

## Patentansprüche

1. Spannvorrichtung für einen Riementrieb, der einen endlos umlaufenden Riemen, eine Elektromaschine (1) mit einem Antriebsrad (5) und zumindest ein weiteres Triebrad aufweist, das über den Riemen mit dem Antriebsrad (5) in Antriebsverbindung steht, wobei die Spannvorrichtung (2) folgendes umfasst:
- ein Spannergehäuse (8), das um die Achse des Antriebsrads (5) verschwenkbar auf der Elektromaschine (1) gelagert ist,
- einen im Spannergehäuse (8) beweglich gelagerten Spannarm (17),
- zwei Spannrollen (6, 7), die den Riemen in dessen Umlaufrichtung vor und hinter dem Antriebsrad (5) mit Vorspannkraft beaufschlagen, wobei eine der Spannrollen (7) auf dem Spannarm (17) gelagert ist und die andere Spannrolle (6) ortsfest auf dem Spannergehäuse (8) gelagert ist,
- und ein die Vorspannkraft erzeugendes Federmittel (20a, 20b), dessen Federenden (25a, 25b) zwischen dem Spannergehäuse (8) einerseits und dem Spannarm (17) andererseits eingespannt sind,
**dadurch gekennzeichnet, dass** das Federmittel zwei in Reihe geschaltete Schraubendruckfedern (20a, 20b) umfasst, deren einander zugewandte Federenden (23a, 23b) durch ein im Spannergehäuse (8) gleitend gelagertes Zwischenstück (24) separiert sind, wobei der Spannarm (17) einen Dornfortsatz (28) aufweist, der die seitens des Spannarms (17) verlaufende Schraubendruckfeder (20a) durchsetzt und im Zwischenstück (24) gleitend gelagert ist.

2. Spannvorrichtung nach Anspruch 1, **dadurch gekennzeichnet, dass** der Dornfortsatz (28) kreisbogenförmig und die Schraubendruckfedern (20a, 20b) als Bogenfedern ausgebildet sind.

3. Spannvorrichtung nach Anspruch 2, **dadurch gekennzeichnet, dass** die Bogenfedern (20a, 20b) Gleichteile sind.

## Claims

1. Tensioning apparatus for a belt drive which has an endlessly circulating belt, an electric machine (1) with a drive wheel (5), and at least one further driving wheel which is drive-connected to the drive wheel (5) via the belt, the tensioning apparatus (2) comprising the following:
- a tensioner housing (8) which is mounted on the electric machine (1) such that it can be pivoted about the axle of the drive wheel (5),
- a tensioning arm (17) which is mounted movably in the tensioner housing (8),
- two tensioning rollers (6, 7) which load the belt with prestressing force upstream and downstream of the drive wheel (5) in the circulating direction of said belt, one of the tensioning rollers (7) being mounted on the tensioning arm (17) and the other tensioning roller (6) being mounted in a stationary manner on the tensioner housing (8),
- and a spring means (20a, 20b) which generates the prestressing force and the spring ends (25a, 25b) of which are clamped in between the tensioner housing (8) on one side and the tensioning arm (17) on the other side,
**characterized in that** the spring means comprises two helical compression springs (20a, 20b) which are connected in series and the spring ends (23a, 23b) of which, which face one another, are separated by an intermediate piece (24) which is mounted slidingly in the tensioner housing (8), the tensioning arm (17) having a mandrel projection (28) which penetrates the helical compression spring (20a), which runs on the side of the tensioning arm (17), and is mounted slidingly in the intermediate piece (24).

2. Tensioning apparatus according to Claim 1, **characterized in that** the mandrel projection (28) is of arcuate configuration and the helical compression springs (20a, 20b) are configured as bow springs.

3. Tensioning apparatus according to Claim 2, **characterized in that** the bow springs (20a, 20b) are identical parts.

## Revendications

1. Dispositif de tensionnement pour une transmission à courroie qui présente une courroie en mouvement sans fin, un moteur électrique (1) avec une roue d'entraînement (5) et au moins une roue motrice supplémentaire qui est en liaison d'entraînement par le biais de la courroie avec la roue d'entraînement (5), le dispositif de tensionnement (2) comprenant :
- un boîtier de dispositif de tensionnement (8) qui est supporté sur le moteur électrique (1) de manière à pouvoir pivoter autour de l'axe de la roue d'entraînement (5),
- un bras de tensionnement (17) supporté de manière déplaçable dans le boîtier de dispositif de tensionnement (8),
- deux poulies de tensionnement (6, 7) qui sollicitent la courroie avec une force de précontrainte dans sa direction périphérique avant et après la roue d'entraînement (5), l'une des poulies de tensionnement (7) étant supportée sur le bras de tensionnement (17) et l'autre poulie de tensionnement (6) étant supportée de manière fixe sur le boîtier de dispositif de tensionnement (8),
- et un moyen de ressort (20a, 20b) générant la force de précontrainte, dont les extrémités de ressort (25a, 25b) sont serrées entre le boîtier de dispositif de tensionnement (8) d'une part et le bras de tensionnement (17) d'autre part,
**caractérisé en ce que** le moyen de ressort comprend deux ressorts de compression hélicoïdal (20a, 20b) montés en série, dont les extrémités de ressort (23a, 23b) tournées l'une vers l'autre sont séparées par une pièce intermédiaire (24) supportée de manière glissante dans le boîtier de dispositif de tensionnement (8), le bras de tensionnement (17) présentant une saillie de mandrin (28) qui traverse le ressort de compression hélicoïdal (20a) s'étendant du côté du bras de tensionnement (17) et qui est supportée de manière glissante dans la pièce intermédiaire (24).

2. Dispositif de tensionnement selon la revendication 1, **caractérisé en ce que** la saillie de mandrin (28) est réalisée sous forme d'arc de cercle et les ressorts de compression hélicoïdaux (20a, 20b) sont réalisés sous forme de ressorts en arc.

3. Dispositif de tensionnement selon la revendication 2, **caractérisé en ce que** les ressorts en arc (20a, 20b) sont des pièces identiques.
